# EUROPEAN PATENT SPECIFICATION

(11) **EP 2 446 710 B1**
(45) Date of publication and mention of the grant of the patent: **23.04.2014**
(21) Application number: 10728363.2
(22) Date of filing: 14.06.2010
(51) Int. Cl.: H05B 37/02, G08C 23/04, G08C 17/02

(54) **PUSHBITS FOR SEMI-SYNCHRONIZED POINTING**
DRUCKKNÖPFE FÜR HALBSYNCHRONISIERTE INDIKATION
BOUTONS-POUSSOIRS POUR POINTAGE SEMI-SYNCHRONISE

(30) Priority: 23.06.2009 EP 09163439
(43) Date of publication of application: 02.05.2012
(73) Proprietor: Koninklijke Philips N.V., 5656 AE Eindhoven (NL)
(72) Inventor: TALSTRA, Johan, Cornelis, NL-5656 AE Eindhoven (NL); PENNING DE VRIES,Hendricus Theodorus GerardusMaria, NL-5656 AE Eindhoven (NL); YIANNI, George, Frederic, NL-5656 AE Eindhoven (NL)
(74) Representative: van Eeuwijk, Alexander Henricus Waltherus
(86) International application number: PCT/IB2010/052640
(87) International publication number: WO 2010/150131

(56) References cited:
- WO-A1-2007/095740
- WO-A1-2008/030315
- US-A1- 2003 107 888
- US-B2- 7 417 556

## Description

### FIELD OF THE INVENTION

The present invention is related to remote control of a lighting system, and more particularly to the selection of a particular light source among a plurality of light sources by means of a remote controller.

### BACKGROUND OF THE INVENTION

In a lighting system having several individual light sources which are capable of communicating with a remote controller, a desired control feature is to be able to control the light output of an individual light source merely by pointing at it with the remote controller and operating a control mechanism, such as buttons or the like.

However, in order to make this work, the remote controller has to be able to identify which one of the light sources the user is actually pointing at. Methods have been developed where each light source transmits a different code in a directional signal by means of modulating its ordinary light output or by means of modulating a separate code transmitting element, such as an IR-LED (InfraRed Light Emitting Diode) or a radio frequency transmitter, e.g. a 60 GHz directional transmitter. The code most prominently received, according to some criterion, by the remote controller is selected. For example the criterion can be "smallest angle of incidence" or "strongest optical signal", etc.

For example, the publication WO 2007/095740 discloses a lighting system where each light source is configured to emit a beacon signal representative of the unique identifier, i.e. code, thereof on command of a remote controller. That is, the remote controller transmits an instruction to the light source that commands the light source to transmit the beacon signal, which is a directional signal. The beacon signal is integrated into the light emitted by the ordinary light source. The remote controller is configured to receive the light and extract the beacon signal therefrom. There are problems with such a lighting system.

One problem is related to synchronization. The remote controller commands several light sources to transmit their codes at the same time. In order for the remote controller to be able to separate the received codes from each other it is equipped with circuitry for correlating the optical signals received from different light sources in one way or the other. In order to obtain a reliable result of which light source is the most prominent one, it is desirable that the optical signals are received by the remote controller at an anticipated point of time, and substantially simultaneous.

Another problem is related to the number of light sources. As the number grows more codes are required. In order to keep a reasonable degree of orthogonality, the length of the codes grows linearly. Longer codes require more time to transmit, or require faster code-generating hardware/software in the light sources.

Further, there are different types of remote controllers, such as those based on simple photodiodes and more advanced remote controllers employing a camera. These different types of remote controllers operate best with different types of codes. In order to be useful in practice the light sources will have to be equipped with multiple code schemes for the beacons, which is cumbersome.

### SUMMARY OF THE INVENTION

It is an object of the present invention to overcome at least some of these problems, and to provide a lighting system control that simplifies the coding.

This object is achieved by means of a method of controlling a lighting system as defined in claim 1, and by means of a lighting system as defined in claim 12.

Since the codes are generated remotely of the light sources and provided to the light sources by the remote controller, the light sources do not have to be equipped at manufacture with multiple coding schemes for optical signals, or even with any coding scheme. Furthermore, there is no problem of increasing the number of light sources, since the coding is adapted to the number of light sources remotely from the controller. In accordance with an embodiment of the method, it is the remote controller itself that generates the codes to be transmitted by the light sources. Thereby no other device is needed for the full controlling of the light sources. Furthermore, since the remote controller provides the light sources with a set of predefined code symbols, which set includes the more than one code symbols, the light sources do not need to know anything about coding, the length of the code, etc.

In accordance with the invention, every code consists of a sequence of more than one code symbols, and the remote controller instructs the light sources to transmit the code symbols at different times, one code symbol at a time, and which symbol to transmit. This is advantageous in that the light sources need only be capable of transmitting a single symbol.

In accordance with an embodiment of the method, the set of predefined code symbols is dynamically updated in dependence of changes in the total number of light sources. Thereby, the code generation is easily adaptable to the momentary need in the lighting system.

In accordance with an embodiment of the method, the method further comprises selecting the code symbols from a group of code symbols having a primary feature of one of amplitude and frequency. These features are typically involved in the light generation and consequently the optical signal is easily generated by means of existing structures of the light sources.

In accordance with an embodiment of the method, it comprises querying the light sources for their capabilities before generating the codes. In this way it is possible to adapt the codes to the capabilities of the least equipped light sources, thereby providing for example as simple codes as possible or having the option of generating more complex codes, whichever might be desired.

In accordance with an embodiment of the method, it comprises generating codes with different characteristics for different subsets of the light sources. Thereby the coding can be made more efficient. For example, the complexity of the codes can be kept at a low level even if the number of light sources increases, or, if combined with the querying, the light sources can be divided into groups of different levels of capability and codes having different levels of complexity in correspondence with the different capabilities can be generated.

In accordance with an embodiment of the method, several light sources are instructed on one occasion by means of a single broadcast. Thereby the time consumption for the instruction operation is shortened in comparison with an individual instruction operation and the transmission of the light sources is synchronized, at least to a certain degree.

In accordance with another aspect of the present invention there is provided a lighting system arranged to carry out the method. The lighting system provides advantages corresponding to those of the method.

### BRIEF DESCRIPTION OF THE DRAWINGS

These and other aspects of the present invention will now be described in more detail, with reference to the appended drawings showing embodiment(s) of the invention.
Fig. 1 is a schematic illustration of a lighting system.
Fig. 2 is a schematic block diagram of an embodiment of a remote controller and a light source according to this invention.
Fig. 3 is a timing diagram of code transmission in the lighting system according to an embodiment of the method and lighting system.
Figs. 4 and 5 are flow charts of embodiments of the method of selecting a light source according to this invention.

### DETAILED DESCRIPTION

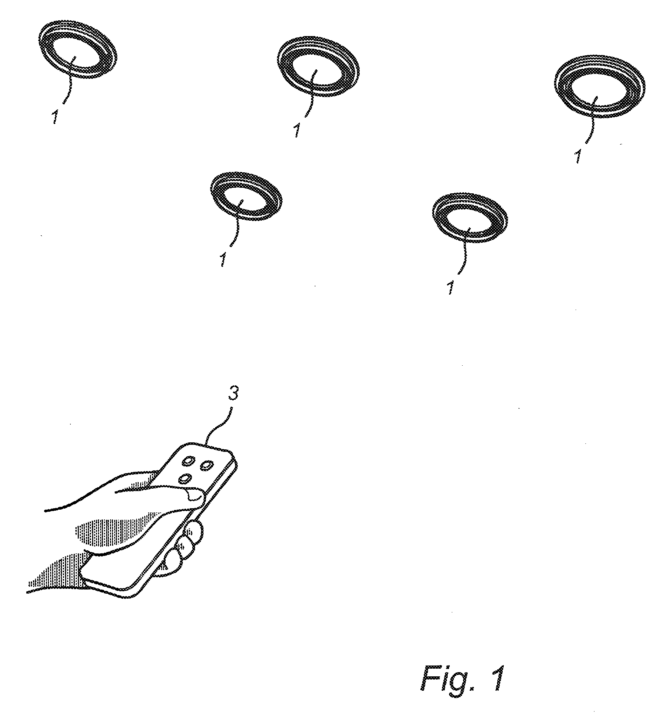

Referring to Fig. 1, an embodiment of a lighting system according to this invention comprises several light sources (LS) 1, and a remote controller (RC) 3, which is used to control the settings of the light sources.

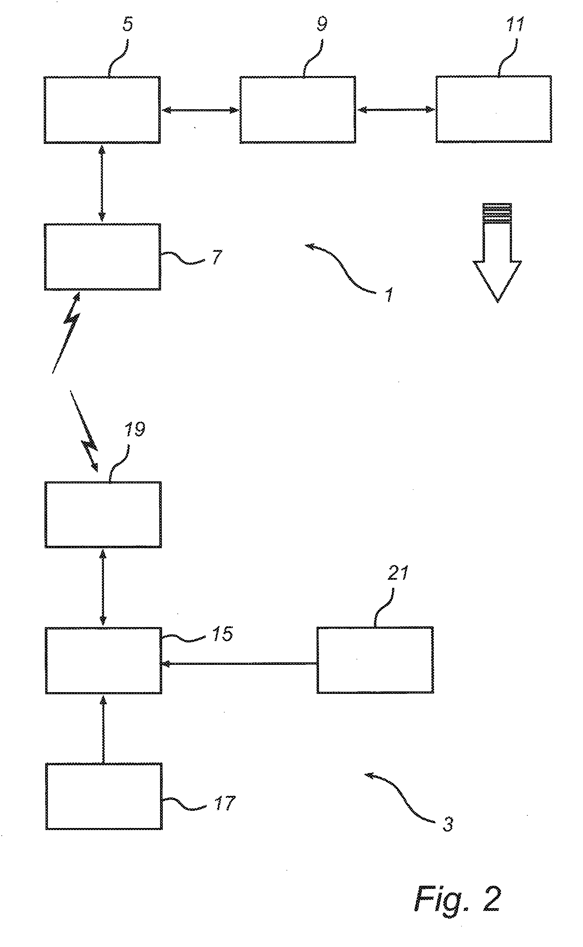

In order to explain the communication between the remote controller 3 and the light sources 1 Fig. 2 shows a block diagram of an embodiment of the remote controller (RC) 3 as well as a light source (LS) 1. The light source 1 comprises a control unit 5, an RF (radio frequency) module 7, connected with the control unit 5, a light element driver 9, connected with the control unit 5, and a set of light elements 11, including at least one light element, connected with the light element driver 9.

The remote controller 3 comprises a control unit 15, a control mechanism 17, connected with the control unit 15, an omnidirectional transmitter, which in this embodiment is an RF (Radio Frequency) transmitter comprised in an RF module 19 in conjunction with a radio receiver, connected with the control unit 15, and a directional signal receiver, here an optical receiver 21, connected with the control unit 15. The control mechanism 17 includes a user interface, such as a touch screen or a number of push buttons. The remote controller 3 is arranged to communicate with the light sources using: (i) on the one hand RF communication by means of the RF modules 7, 19, over an omnidirectional channel, and (ii) on the other hand optical communication by means of the light elements 11 and the receiver 21, over a directional channel, which is also unidirectional from the light source 1 to the remote controller 3. Furthermore, the remote controller 3 comprises signal comparison circuitry, connected to the optical receiver 21 and to the control unit 15, and a transmission indicator, which is comprised in the RF module 19, and connected to the signal comparison circuitry.

According to an embodiment of the method of controlling the lighting system, when the user points at a light source 1 and pushes a control button 17 to change the settings of the light source 1, the remote controller 3 starts communicating with several light sources 1 via wireless radio communication by means of the RF module 19. The several light sources 1 represent all or a subgroup of the light sources 1 in the lighting system. More particularly, the remote controller 3 omnidirectionally transmits instructions to the light sources 1 telling them to transmit the directional signal, which is here an optical signal, comprising a code, which is unique for each light source 1. The different codes are included in the transmitted instruction. In this RF communication the remote controller 3 employs basic identification, or addresses, unique for each light source 1 and generated at manufacture. This is per se known to the person skilled in the art, and for example such addresses are called MAC addresses. The remote controller 3 learns about these addresses in a previous commissioning which will be described below.

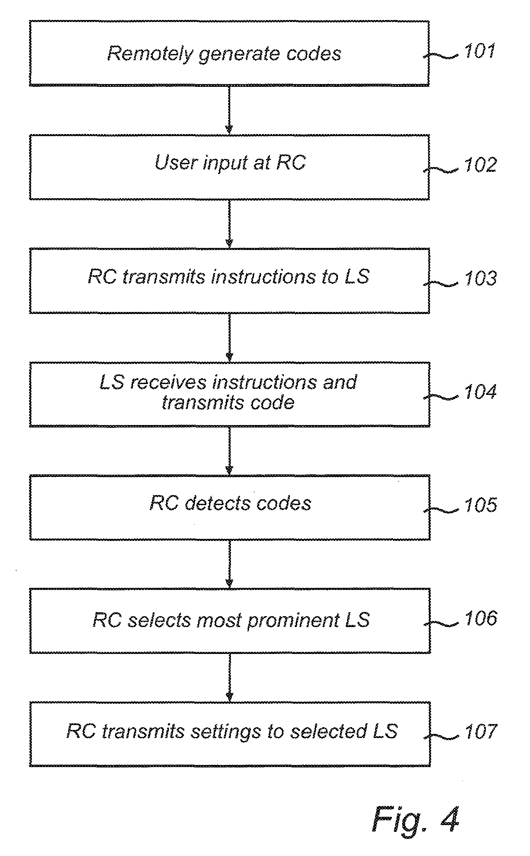

Referring to the flow chart of Fig. 4, in one embodiment of the method the codes are generated remotely of the light sources (LS) 1, in step 101. In this embodiment it is the remote controller (RC) 3 that has generated the codes, but alternatively the lighting system can comprise a central device which generates the codes and sends them to the remote controller 3. When the user points at a light source with the remote controller 3 and pushes a button 17 to set the light output, the following procedure is executed. The remote controller 3 receives, in step 102, the user input and omnidirectionally transmits, by means of its RF module 19, the codes to the light sources 1 together with a command to transmit the codes, step 103. When each light source 1 receives the transmit command and the respective individual code at its RF module 7, it directionally transmits the code as received by means of the set of light elements 11, i.e. as an optical signal, step 104. Then the remote controller 3 in turn receives the optical signals at the optical detector 21, detects the codes, step 105, and performs a selection procedure to recognize which light source 1 the remote controller 3 is pointing at, step 106. When a light source 1 has been selected, the remote controller 3 transmits the new settings to that light source 1, step 107.

According to another embodiment, the codes consist of code symbols, which are also called chips. The remote controller 3 transmits one symbol at a time to the light sources 1. This is advantageous in that the demands on the capability of the light sources can be kept comparably low, since they only have to transmit a single symbol, i.e. a fraction of a code, rather than a full code. As an example, assume that the remote controller 3 has generated two different code symbols S1 and S2, where S1="0", and means "no light", and S2="1", and means "full light", and assume that each code consists of four symbols. Further, assume that there are three light sources, LS1, LS2 and LS3 and that the remote controller has generated codes c₁={S1,S1,S2,S2}, c₂={S1,S2,S1,S2} and c₃={S2,S1,S1,S2} for LS1, LS2, and LS3, respectively.

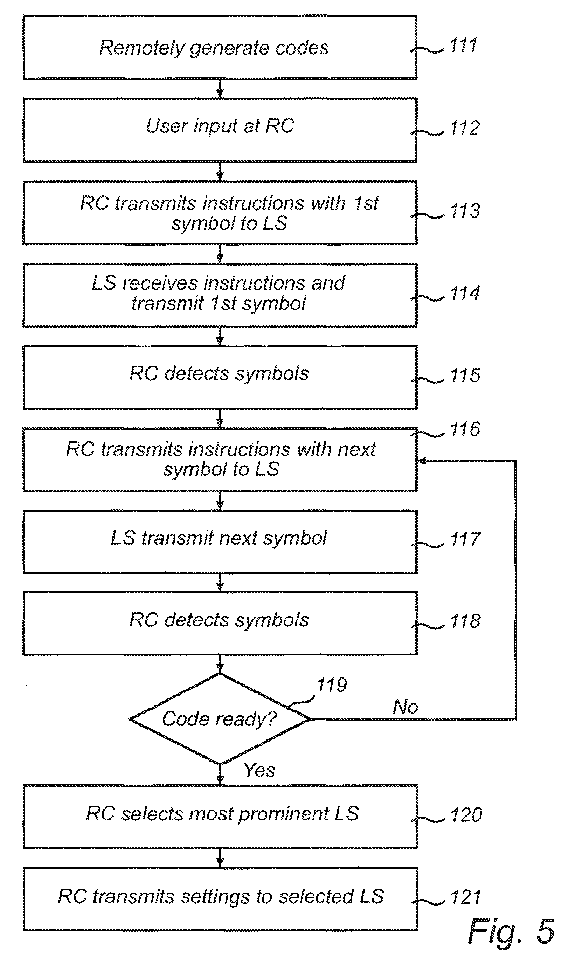

When the user pushes the setting button, step 112 (Fig. 5), the remote controller 3 instructs the light sources 1 to transmit their respective first symbol by transmitting the command {LS1 transmit S1, LS2 transmit S1, LS3 transmit S2} via the omnidirectional channel, step 113. Each respective light source directionally transmits its symbol, step 114. The remote controller 3 measures the detected response, step 115.

The remote controller 3 instructs the light sources 1 to transmit their second symbol with the command {LS1 transmit S1, LS2 transmit S2, LS3 transmit S1}. Again the remote controller 3 measures the detected response, steps 116-118.

Two further operations, which are similar to that in item 2, but with symbols according to the generated codes above, are performed and then all symbols in the codes have been transmitted, and the remote controller 3 is able to finally decide, according to some criterion, as exemplified below, which one of the light sources 1 is most prominent, in step 120, and this light source is decided to be the one the remote controller 3 is pointing at.

Finally, the remote controller transmits the new settings to the selected light source, step 121.

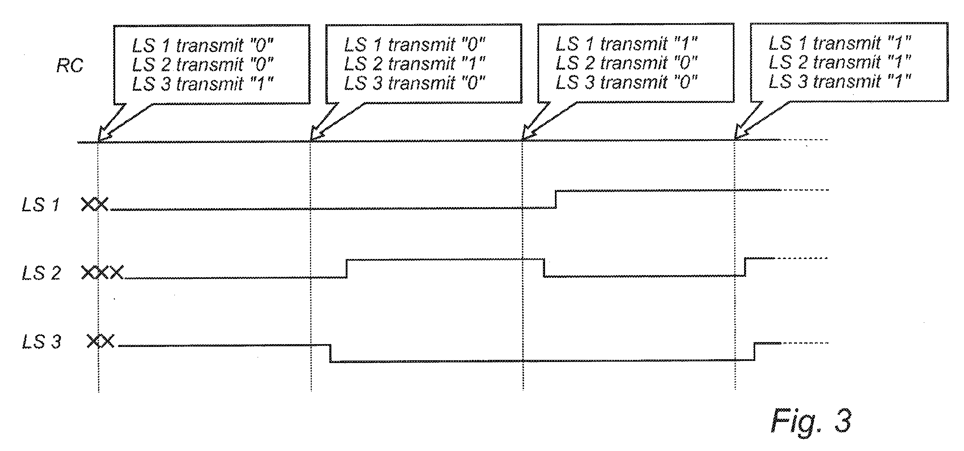

A timing diagram for this example of selecting a light source is illustrated in Fig. 3. Because the remote controller 3 determines when the symbols are to be transmitted, the lighting system is automatically synchronous. This synchronous behavior is true for the operation at large. Looking at a very accurate time scale, however, some delays will occur in practice in the omnidirectional channel and in the processing of commands in the light sources 1. In order to ascertain that the code symbols are actually received at the detector 21 when making the very measurement, an offset, typically in the order of a few milliseconds, is used between the transmission of the commands from the remote controller 3 and the measurement of the received code symbols, or codes in the first embodiment above. Further, the light sources do not need to know about codes, since they simply transmit the symbols when and as they are commanded by the remote controller 3. This means that the light sources 1 do not need to know about how many other light sources there are in the system, etc. As the remote controller 3 determines the lengths of the symbols, or chip-rate, the light sources 1 neither need to know about orthogonal and non-orthogonal codes.

As an optimization, in accordance with an embodiment of the method the commands to the individual light sources to transmit their *n*^{th} code symbol are combined into a single broadcast, rather than in *m* separate messages to *m* light sources. This minimizes the delays in the arrival time that exist on any wireless channel. In a further optimization, the broadcasts following a first broadcast to complete the codes could code only the changes with respect to the previous broadcast. For example, referring to the above example and fig. 3, the remote controller 3 would transmit {LS1:S1;LS2:S1;LS3:S2}, {LS2:S2;LS3:S1}, {LS1:S2;LS2:S1}, {LS2:S2;LS3:S2}.

A further feature that is applicable is to define a "back-to-normal" command that the remote controller 3 would transmit after the last symbol has been transmitted, since the light sources 1 do not know whether a particular symbol will be the last one. When receiving the "back-to-normal" command, the light sources 1 will return to their setting prior to the first code symbol broadcast. The advantage is that the remote controller 3 does not have to send a separate message to every light source 1 to return it to its previous setting. In addition, or as an alternative, there also is a time-out such that the light sources 1 automatically return to their original setting if they have not received a code symbol broadcast command for a predetermined time period, which for instance can be in the order of one or a few seconds.

As regards the measurements and calculations performed by the remote controller 3 on the received optical signals from the light sources 1, they can be performed according to any useful presently known or future method. For example, a known method is based on measuring an angle of incidence, where the light source having the smallest angle of incidence is selected by the remote controller 3, as disclosed e.g. in non-published application PCT/1B2009/052363. Another method is based on light intensity, where the light source having the strongest intensity is selected by the remote controller 3.

Before the user can start setting the light sources 1, some basic exchange of information has to take place between the remote controller 3 and the light sources 1. This is done during a commissioning phase. During commissioning the remote controller 3 acquires information about the number of light sources in the lighting system, about their inherent identification details, and about what their capabilities are. This information is used for generating appropriate codes and code symbols, which preferably, but not necessarily, should be chosen so as to obtain as short codes as possible, or codes which are efficient for some other reason. When generated, the remote controller 3 transmits information about the code symbols to the light sources. Thus, for example in accordance with an embodiment, the commissioning phase is as follows.
1. The light sources are powered up.
2. Each light source 1 broadcasts, by means of its RF module, a message over the omnidirectional channel saying that it needs to be commissioned. The light source 1 includes its basic identification, such as a MAC address.
3. The remote controller 3 queries the light sources what their capabilities are, while employing the basic identification. For instance, the remote controller 3 may query each light source about what PWM frequencies the light source can create, what its minimum/maximum light output intensity is, the accessible color space for light sources comprising a number of primary light elements, etc.
4. Taking into account the capabilities of the light sources 1, the number of light sources to accommodate, and its own receiver type, the remote controller 3 determines a set of appropriate symbols and a set of codes.
5. The remote controller transmits the definition of the symbols, which is also called an alphabet, to the light sources 1.

It is presently preferred that these commissioning steps are executed at the initial startup of the lighting system and in case the alphabet has to be changed when a new light source is added to the lighting system. However, it is only necessary to change the alphabet when the number of light sources grow beyond a certain threshold. Therefore most of the time steps to 1 to 5 adapted to the addition of a single new light source are performed, since the rest of the light sources already have the necessary information. They only have to be updated when the current set of codes cannot accommodate one more light source.

There are alternative ways of performing the commissioning. For instance, the commissioning can take place each time a light source is turned on.

As regards the transmission technology as such, both for the RF communication and for the optical communication, the general knowledge of the person skilled in the art is useful and adequate, and therefore it will not be described in detail herein. However, it should be mentioned that for an application where the remote control is able to set a PWM (Pulse Width Modulation) frequency and duty cycle in the light sources it would be advantageous to use TDMA (Time Division Multiple Access), FDMA (Frequency Division Multiple Access), or CDMA (Code Division Multiple Access) codes for the optical transmission. In such an application, for instance, the light sources 1 can have LED (Light Emitting Diode) light elements, and more particularly a number of primary light elements, such as R (red), G (green), and B (blue) LED light elements. Anyhow, in order to transmit the codes from the light sources 1, some kind of modulation of the light output is performed, such as the on-off modulation used in the above example, or an amplitude modulation. The kind of modulation is chosen, as understood by the skilled person, as far as possible such that the user does not perceive any flicker in the emitted light.

The person skilled in the art realizes that the present invention by no means is limited to the preferred embodiments described above. On the contrary, many modifications and variations are possible within the scope of the appended claims. In additon to those mentioned above, some further examples are as follows.

The symbols generated remotely of the light sources can be different for different light sources in dependence of their capabilities. For example, in a lighting system there may exist older light sources having a simple firmware and/or hardware, and newer light sources having a considerably more advanced firmware and/or hardware providing much greater possibilities of control.

Furthermore, the remote controller can be equipped to consider the surroundings when generating the alphabet. For example, if there is a stationary source of interference, such as the sun or a non-modulated artificial light source, this can be detected and considered.

The lighting system can be arranged such that the remote controller is able to specify the intensity for every symbol relative to the intensity prior to pointing, e.g. +10% / - 10%, to limit the visibility of the modulation of the light output. In particular for a pure FDMA scheme there is no need to change the amplitude except if it was at a zero level prior to the selection procedure, and the code transmission can be made virtually invisible.

As a further alternative, in order to facilitate the commissioning for the light source and the remote controller, there are a number of predetermined profiles, which the light source can support, e.g. a simple on/off profile, a profile that can also do PWM-frequency modulation, etc. When queried, the light source reports the profile(-s) it supports.

In an alternative embodiment, the instructions transmitted by the remote controller include a time period during which the light sources should transmit the code symbol.

In a further embodiment the remote controller is arranged to measure a signal-to-noise ratio of the received optical signals, and to change the code of a light source adaptively in order to improve that signal-to-noise ratio.

According to an alternative embodiment, the RF modules used for omnidirectional communication, in the remote controller and in the light sources, are instead IR (InfraRed) modules.

According to an alternative embodiment, the directional transmission from the light sources to the remote controller is performed by means of IR devices, such as IR LEDs. A further alternative is to employ RF directional transmitters, such as 60 GHz RF transmitters. For instance these alternatives are applicable when the light source is an incandescent lamp, which is too slow to be directly modulated.

According to an alternative embodiment, when the light source is a multichannel light source, such as a multichannel LED, the signalling can be performed by means of a single one of the channels. For instance, in an RGB LED lamp, only the R channel can be used for generating the directional signals.

## Claims

1. A method of selecting a light source (1) among a plurality of light sources by means of a remote controller (3) comprising:
- the remote controller (3) instructing, by omnidirectional transmission, the light sources (1) to each transmit a directional signal comprising a code, which is unique for each light source (1);
- the remote controller (3) receiving the directional signals from the light sources (1); and
- the remote controller (3) selecting one of the light sources (1) on the basis of the received directional signals;
- generating, remotely of the light sources (1), the codes to be transmitted by the light source (1); and
- the remote controller (3) instructing each one of the light sources (1) which one of the remotely determined codes to transmit, **characterized in that** each generated code consists of a sequence of more than one code symbols, and **in that** the step of the remote controller (3) instructing each one of the light sources (1) which one of the remotely generated codes to transmit comprises:
- the remote controller (1) instructing the light sources (1) to transmit the code symbols at different times, one code symbol at a time, and which code symbol to transmit at what time.

2. A method according to claim 1, wherein the remote controller (3) performs the generation of codes.

3. A method according to claim 1 or 2, comprising:
- the remote controller (1) providing the light sources (1) with a set of predefined code symbols, which set includes the more than one code symbols.

4. A method according to claim 3, wherein the set of predefined code symbols is dynamically updated in dependence of changes in the total number of light sources (1).

5. A method according to any one of claims 1-4, comprising
- selecting the code symbols from a group of code symbols having a primary feature of one of amplitude and frequency.

6. A method according to any one of the preceding claims, comprising:
- querying a light source (1) for its capabilities before generating the codes.

7. A method according to any one of the preceding claims, comprising:
- determining codes with different characteristics for different subsets of the light sources (1).

8. A method according to any one of the preceding claims, comprising:
- instructing several light sources (1) in a single broadcast.

9. A method according to any one of the preceding claims, comprising:
- the remote controller (3) changing the code of a light source (1) adaptively so as to improve a signal-to-noise ratio at measuring the received directional signals.

10. A method according to any one of the preceding claims, wherein the codes are generated such as to create at least one of a TDMA system, an FDMA system, and a CDMA system.

11. A method according to any one of the preceding claims, comprising:
- the remote controller (3), after having selected one light source (1), instructing the light sources (1) to return to the settings they had prior to said selecting a light source (1).

12. A lighting system comprising a plurality of light sources (1) and a remote controller (3), arranged to select a light source (1) among the plurality of light sources (1), wherein:
- the remote controller (3) comprises an omnidirectional transmitter (19) and is arranged to instruct, by means of the omnidirectional transmitter (19), the light sources to transmit a directional signal comprising a code, which is unique for each light source;
- the remote controller (3) comprises a directional signal receiver (21), and is arranged to receive the directional signals from the light sources (1); and
- the remote controller (3) comprises signal comparison circuitry connected with the directional signal receiver (21), and is arranged to select one of the light sources (1) on the basis of the received directional signals;
- the light sources (1) comprise a module (7) for receiving the instructions from the remote controller (3) and means (11) for transmitting said directional signals;
- the lighting system comprises code generation means arranged to generate, remotely from the light sources, the codes to be transmitted by the light sources (1); and
- the remote controller (3) is arranged to instruct each one of the light sources (1) which one of the remotely generated codes to transmit, **characterized in that** every code consists of a sequence of more than one code symbols, and that the remote controller is arranged to instruct the light sources to transmit the code symbols at different times, one code symbol at a time, and which symbol to transmit at what time.

13. A lighting system according to claim 12, wherein the remote controller (3) is arranged to perform the generation of codes.

## Patentansprüche

1. Verfahren, um mit Hilfe einer Fernbedienung (3) eine Lichtquelle (1) unter mehreren Lichtquellen auszuwählen, wonach:
- die Fernbedienung (3) die Lichtquellen (1) mittels omnidirektionaler Übertragung anweist, jeweils ein einen Code enthaltendes, gerichtetes Signal zu übertragen, das für jede Lichtquelle (1) einzigartig ist;
- die Fernbedienung (4) die gerichteten Signale von den Lichtquellen (1) empfängt und
- die Fernbedienung (3) eine der Lichtquellen (1) auf der Grundlage der empfangenen gerichteten Signale auswählt;
- die von den Lichtquellen (1) zu übertragenden Codes von den Lichtquellen (1) entfernt erzeugt werden; und
- die Fernbedienung (3) jede der Lichtquellen (1) anweist, welcher der fernbestimmten Codes zu übertragen ist, **dadurch gekennzeichnet, dass** jeder erzeugte Code aus einer Folge von mehr als einem Codesymbol besteht, und dass der Schritt, wonach die Fernbedienung (3) jede der Lichtquellen (1) anweist, welcher der fernerzeugten Codes zu übertragen ist, den Schritt einschließt, wonach:
- die Fernbedienung (3) die Lichtquellen (1) anweist, die Codesymbole zu verschiedenen Zeitpunkten - jeweils ein Codesymbol zu einem Zeitpunkt - zu übertragen, und welche Codesymbole zu welchen Zeitpunkten zu übertragen sind.

2. Verfahren nach Anspruch 1,wobei die Fernbedienung (3) die Erzeugung von Codes vornimmt.

3. Verfahren nach Anspruch 1 oder 2, wonach:
- die Fernbedienung (3) die Lichtquellen (1) mit einem Satz von vorher festgelegten Codesymbolen versieht, wobei der Satz die aus mehr als einem Codesymbol bestehenden Codesymbole enthält.

4. Verfahren nach Anspruch 3, wobei der Satz von vorher festgelegten Codesymbolen in Abhängigkeit von Änderungen in der Gesamtanzahl von Lichtquellen (1) dynamisch aktualisiert wird.

5. Verfahren nach einem der Ansprüche 1-4, wonach:
- die Codesymbole aus einer Gruppe von Codesymbolen mit einem primären Amplituden- oder Frequenzmerkmal ausgewählt werden.

6. Verfahren nach einem der vorangegangenen Ansprüche, wonach:
- eine Lichtquelle (1) vor Erzeugen der Codes in Bezug auf deren Fähigkeiten abgefragt wird.

7. Verfahren nach einem der vorangegangenen Ansprüche, wonach:
- Codes mit verschiedenen Charakteristiken für verschiedene Teilmengen der Lichtquellen (1) ermittelt werden.

8. Verfahren nach einem der vorangegangenen Ansprüche, wonach:
- mehrere Lichtquellen (1) in einer einzigen Übertragung angewiesen werden.

9. Verfahren nach einem der vorangegangenen Ansprüche, wonach:
- die Fernbedienung (3) den Code einer Lichtquelle (1) adaptiv ändert, um bei Messung der empfangenen gerichteten Signale ein Signal/Rausch-Verhältnis zu verbessern.

10. Verfahren nach einem der vorangegangenen Ansprüche, wobei die Codes so generiert werden, dass zumindest ein TDMA-System, ein FDMA-System oder ein CDMA-System erzeugt wird.

11. Verfahren nach einem der vorangegangenen Ansprüche, wonach:
- die Fernbedienung (3) nach Auswählen einer Lichtquelle (1) die Lichtquellen (1) anweist, wieder zu den Einstellungen zurückzukehren, in denen sie sich vor dem Auswählen einer Lichtquelle (1) befanden.

12. Beleuchtungssystem mit mehreren Lichtquellen (1) und einer Fernbedienung (3), die so eingerichtet ist, dass sie eine Lichtquelle (1) unter den mehreren Lichtquellen (1) auswählt, wobei:
- die Fernbedienung (3) einen omnidirektionalen Sender (19) umfasst und so eingerichtet ist, dass sie die Lichtquellen mit Hilfe des omnidirektionalen Senders (19) anweist, ein einen Code enthaltendes, gerichtetes Signal zu übertragen, das für jede Lichtquelle einzigartig ist;
- die Fernbedienung (3) einen Richtsignal-Empfänger (21) umfasst und so eingerichtet ist, dass sie die gerichteten Signale von den Lichtquellen (1) empfängt und
- die Fernbedienung (3) eine mit dem Richtsignal-Empfänger (21) verbundene Signalvergleichsschaltung umfasst und so eingerichtet ist, dass sie eine der Lichtquellen (1) auf der Grundlage der empfangenen gerichteten Signale auswählt;
- wobei die Lichtquellen (1) ein Modul (7) zum Empfang der Anweisungen von der Fernbedienung (3) sowie Mittel (11) zur Übertragung der gerichteten Signale umfassen;
- wobei das Beleuchtungssystem Codeerzeugungsmittel umfasst, die so eingerichtet sind, dass sie die von den Lichtquellen (1) zu übertragenden Codes von den Lichtquellen entfernt erzeugen; und
- die Fernbedienung (3) so eingerichtet ist, dass sie jede der Lichtquellen (1) anweist, welcher der fernbestimmten Codes zu übertragen ist, **dadurch gekennzeichnet, dass** jeder Code aus einer Folge von mehr als einem Codesymbol besteht, und dass die Fernbedienung so eingerichtet ist, dass sie die Lichtquellen anweist, die Codesymbole zu verschiedenen Zeitpunkten - jeweils ein Codesymbol zu einem Zeitpunkt - zu übertragen, und welche Codesymbole zu welchen Zeitpunkten zu übertragen sind.

13. Beleuchtungssystem nach Anspruch 12, wobei die Fernbedienung (3) so eingerichtet ist, dass sie die Erzeugung von Codes vornimmt.

## Revendications

1. Procédé de sélection d'une source de lumière (1) parmi une pluralité de sources de lumière au moyen d'une télécommande (3), comprenant :
- la fourniture d'une instruction au moyen de la télécommande (3), par transmission omnidirectionnelle, aux sources de lumière (1) pour que chacune transmette un signal directionnel comprenant un code, qui est unique pour chaque source de lumière (1) ;
- la réception par la télécommande (3) des signaux directionnels provenant des sources de lumière (1) ; et
- la sélection au moyen de la télécommande (3) d'une des sources de lumière (1) sur la base des signaux directionnels reçus ;
- la génération, à distance des sources de lumière (1), des codes devant être transmis par les sources de lumière (1) ; et
- la fourniture au moyen de la télécommande (3) d'une instruction à chacune des sources de lumière (1) indiquant lequel des codes déterminés à distance doit être transmis, **caractérisé en ce que** chaque code généré est constitué d'une séquence de plusieurs symboles de code, et **en ce que** l'étape de fourniture au moyen de la télécommande (3) d'une instruction à chacune des sources de lumière (1) indiquant lequel des codes générés à distance doit être transmis comprend :
- la fourniture au moyen de la télécommande (3) aux sources de lumière (1) de l'instruction de transmettre les symboles de code à des moments différents, un symbole de code à la fois, en leur indiquant quel symbole de code transmettre et à quel moment.

2. Procédé selon la revendication 1, dans lequel la télécommande (3) opère la génération de codes.

3. Procédé selon la revendication 1 ou 2, comprenant :
- l'attribution au moyen de la télécommande (3) aux sources de lumière (1) d'un ensemble de symboles de code prédéfinis, ledit ensemble incluant les symboles de code.

4. Procédé selon la revendication 3, dans lequel l'ensemble de symboles de code prédéfinis est mis à jour dynamiquement en fonction des changements du nombre total de sources de lumière (1) ;

5. Procédé selon l'une quelconque des revendications 1 à 4, comprenant
- la sélection des symboles de code dans un groupe de symboles de code ayant comme caractéristique principale l'une de l'amplitude et de la fréquence.

6. Procédé selon l'une quelconque des revendications précédentes, comprenant :
- l'interrogation d'une source de lumière (1) sur ses capacités avant de générer les codes.

7. Procédé selon l'une quelconque des revendications précédentes, comprenant :
- la détermination de codes ayant des caractéristiques différentes pour différents sous-ensembles des sources de lumière (1).

8. Procédé selon l'une quelconque des revendications précédentes, comprenant :
- la fourniture d'une instruction à plusieurs sources de lumière (1) en une seule diffusion.

9. Procédé selon l'une quelconque des revendications précédentes, comprenant :
- le changement au moyen de la télécommande (3) du code d'une source de lumière (1) de manière adaptative de sorte à améliorer un rapport signal sur bruit lors de la mesure des signaux directionnels reçus.

10. Procédé selon l'une quelconque des revendications précédentes, dans lequel les codes sont générés de telle sorte à créer au moins un d'un système AMRT, d'un système AMRF et d'un système AMRC.

11. Procédé selon l'une quelconque des revendications précédentes, comprenant :
- la fourniture au moyen de la télécommande (3), après sélection d'une source de lumière (1), aux sources de lumière (1) d'une instruction leur demandant de revenir aux réglages qu'elles avaient avant ladite sélection d'une source de lumière (1).

12. Système d'éclairage comprenant une pluralité de sources de lumières (1) et une télécommande (3), conçue pour sélectionner une source de lumière (1) parmi la pluralité de sources de lumière (1), dans lequel :
- la télécommande (3) comprend un émetteur omnidirectionnel (19) et est conçue pour donner aux sources de lumière, au moyen de l'émetteur omnidirectionnel '(19), l'instruction de transmettre un signal directionnel comprenant un code, qui est unique pour chaque source de lumière ;
- la télécommande (3) comprend un récepteur de signaux directionnels (21), et est conçue pour recevoir les signaux directionnels des sources de lumières (1) ; et
- la télécommande (3) comprend des circuits de comparaison de signaux connectés au récepteur de signaux directionnels (21), et est conçue pour sélectionner l'une des sources de lumière (1) sur la base des signaux directionnels reçus ;
- les sources de lumière (1) comprennent un module (7) pour recevoir les instructions de la télécommande (3) et des moyens (11) de transmission desdits signaux directionnels ;
- le système d'éclairage comprend des moyens de génération de code conçus pour générer, à distance des sources de lumière, les codes devant être transmis par les sources de lumière (1) ; et
- la télécommande (3) est conçue pour donner une instruction à chacune des sources de lumière (1), lui indiquant quel code parmi les codes générés à distance doit être transmis, **caractérisé en ce que** chaque code est constitué d'une séquence de plusieurs symboles de code, et **en ce que** la télécommande est conçue pour donner l'instruction aux sources de lumière de transmettre les symboles de code à des moments différents, un symbole de code à la fois, et leur indiquer quel symbole transmettre et à quel moment.

13. Système d'éclairage selon la revendication 12, dans lequel la télécommande (3) est conçue pour opérer la génération de codes.
